# EUROPÄISCHE PATENTSCHRIFT

(11) **EP 3 515 755 B1**
(45) Veröffentlichungstag und Bekanntmachung des Hinweises auf die Patenterteilung: **18.11.2020**
(21) Anmeldenummer: 17771749.3
(22) Anmeldetag: 20.09.2017
(51) Int. Cl.: B60N 2/07

(54) **SCHIENE SOWIE FAHRZEUGSITZ**
SLIDE AND VEHICLE SEAT
GLISSIÈRE ET SIÈGE DE VÉHICULE

(30) Priorität: 21.09.2016 DE 102016218133; 21.12.2016 DE 102016225818
(43) Veröffentlichungstag der Anmeldung: 31.07.2019
(73) Patentinhaber: Adient Luxembourg Holding S.à r.l., 1855 Luxembourg (LU)
(72) Erfinder: FLICK, Joachim, 42499 Hueckeswagen (DE); SPRENGER, Erik, 42929 Wermelskirchen (DE); QUAST, Ingo, 40477 Düsseldorf (DE); TURAN, Turgay, 50171 Kerpen (DE)
(74) Vertreter: Liedhegener, Ralf
(86) Internationale Anmeldenummer: PCT/EP2017/073786
(87) Internationale Veröffentlichungsnummer: WO 2018/054979

(56) Entgegenhaltungen:
- DE-U1-202008 018 315
- FR-A1- 2 996 179
- FR-A1- 2 996 182

## Beschreibung

Die Erfindung betrifft einen Längseinsteller, insbesondere für einen Fahrzeugsitz, aufweisend mindestens ein Sitzschienenpaar, welches aus einer unteren Sitzschiene und einer relativ zur unteren Sitzschiene in Längsrichtung verschiebbar geführten oberen Sitzschiene gebildet ist, wobei sich die beiden Sitzschienen des Sitzschienenpaares einander wechselseitig umgreifen, wobei die untere Sitzschiene ein im Wesentlichen C-förmiges Profil mit an den Enden nach unten gebogenen Abschnitten aufweist und die obere Sitzschiene ein im Wesentlichen U-förmiges Profil mit nach oben gebogenen Endabschnitten aufweist, wobei die relative Verschiebbarkeit der beiden Sitzschienen zueinander mittels eines Zusammenwirkens eines an der unteren Sitzschiene angeordneten Endanschlags mit einem an der oberen Sitzschiene angeordneten Anschlagelement begrenzt ist, sowie einen Fahrzeugsitz.

### Stand der Technik

Aus der JP 2005-67218 A ist ein gattungsgemäßer Fahrzeugsitz mit einem Längsverschiebemechanismus mit Endanschlägen zur Begrenzung des Verschiebeweges bekannt. Der Längsverschiebemechanismus weist Endanschläge zwischen einer oberen Schiene und einer unteren Schiene auf, wobei Begrenzungselemente der unteren Schiene und Begrenzungselemente der oberen Schiene auf denselben in Längsrichtung projizierten Teilbereichen angeordnet sind.

Aus der DE 20 2008 018 315 U1 ist eine Sitzgleitvorrichtung für ein Fahrzeug bekannt, aufweisend wenigstens eine erste Schiene, die angepasst ist, um an einem von einem Fahrzeugboden und einem Fahrzeugsitz befestigt zu sein, wobei die erste Schiene einen Wandabschnitt mit einem Paar von Einsetzöffnungen aufweist, die in einer Breitenrichtung der ersten Schiene angeordnet sind; wenigstens eine zweite Schiene, die angepasst ist, um an dem anderen von dem Fahrzeugboden und dem Fahrzeugsitz befestigt zu sein, wobei die zweite Schiene an der ersten Schiene montiert ist, um relativ zu der ersten Schiene gleitfähig beweglich zu sein, und mit der ersten Schiene zusammenarbeitet, um einen Innenraum auszubilden; einen ersten Anschlag mit einem Befestigungsabschnitt und einem Paar von Bewegungsbeschränkungsabschnitten.

Aus der DE 10 2016 208 469 A1 ist eine Gleitschiene bekannt, welche eine Festschiene; eine Laufschiene; und vier Verriegelungsstücke, die an einer der Schienen angebracht sind, aufweist. Die vier Verriegelungsstücke sind so konfiguriert, dass sie zum Sperren einer Gleitbewegung zwischen den Schienen kraftbetätigt in Verriegelungsnuten einspuren können, die an der anderen der Schienen ausgebildet sind. Jede Verriegelungsnut hat eine vorgegebene Nutbreite in Gleitrichtung. Die Verriegelungsnuten sind in Intervallen in Gleitrichtung angeordnet, die jeweils das Dreifache der Nutbreite betragen.

Aus der FR 2 286 723 A1 ist eine Schiene zur Verstellung von Fahrzeugsitzen bekannt. Die Schiene besteht aus einem an der Karosserie befestigten unteren U-Profil und einem an dem Sitz befestigten umgekehrten U-Profil. Eine Relativverschiebung der Schienen wird durch eine Reihe von Kugeln erleichtert. Die Kugeln laufen in einem Teil des unteren U-Profils, während Flächen eines an ihnen anliegenden Teils des oberen U-Profils geneigt ist, um die Kugeln nach außen zu stoßen.

Aus der FR 2 996 179 A1 ist eine Vorrichtung mit einem feststehenden Metallprofil und einem beweglichen Metallprofil bekannt, welches derart angebracht ist, dass es relativ zu dem feststehenden Metallprofil in einer Längsrichtung zwischen zwei Grenzpositionen gleitet. Das feste Metallprofil weist einen Anschlag auf, der mit einem Anschlag des beweglichen Metallprofils in Kontakt treten soll, um das relative Gleiten der Metallprofile in einer Bewegungsbegrenzungsposition zu begrenzen. Der Anschlag des festen Metallprofils ist mit einer Kunststoffabdeckung beschichtet, die gegen den Anschlag des beweglichen Metallprofils stoßen soll.

Aus der FR 2 996 182 A1 ist eine Gleitschiene für einen Fahrzeugsitz bekannt, aufweisend ein erstes Profil und ein zweites Profil. Das erste Profil erstreckt sich in einer Längsrichtung und weist einen im Wesentlichen U-förmigen Abschnitt auf, der eine Basis und zwei gegenüberliegende Seitenflügel umfasst, deren sich nach innen zurückgebogenen Endabschnitte sich in Richtung der Basis erstrecken. Das zweite Profil weist einen im wesentlichen U-förmigen Abschnitt auf, der eine Basis und zwei gegenüberliegende, nach seitlich außen umgebogene, Flügel umfasst. Das erste Profil und das zweite Profil sind in Längsrichtung in erster und zweiter Gegenrichtung zueinander verschiebbar gelagert. Die Flügel des zweiten Profils und die Seitenflügel des ersten Profils umgreifen einander und in einem Zwischenraum zwischen den Flügeln und den Seitenflügeln sind ein erstes und ein zweites Stoppelement angeordnet, die jeweils einstückig mit dem ersten Profil und dem zweiten Profil durch Abscheren und Falten von Abschnitten des ersten Profils und des zweiten Profils gebildet sind.

### Aufgabe

Der Erfindung liegt die Aufgabe zu Grunde, einen Längseinsteller der eingangs genannten Art zu verbessern, insbesondere eine optimierte Anordnung und Ausgestaltung von Endanschlägen zur Begrenzung der relativen Verschiebbarkeit zueinander zu ermöglichen, sowie einen entsprechenden Fahrzeugsitz bereitzustellen.

### Lösung

Diese Aufgabe wird erfindungsgemäß gelöst durch einen Längseinsteller, insbesondere für einen Fahrzeugsitz, aufweisend mindestens ein Sitzschienenpaar, welches aus einer unteren Sitzschiene und einer relativ zur unteren Sitzschiene in Längsrichtung verschiebbar geführten oberen Sitzschiene gebildet ist, wobei sich die beiden Sitzschienen des Sitzschienenpaares einander wechselseitig umgreifen, wobei die untere Sitzschiene ein im Wesentlichen C-förmiges Profil mit an den Enden nach unten gebogenen Abschnitten aufweist und die obere Sitzschiene ein im Wesentlichen U-förmiges Profil mit nach oben gebogenen Endabschnitten aufweist, wobei die relative Verschiebbarkeit der beiden Sitzschienen zueinander mittels eines Zusammenwirkens eines an der unteren Sitzschiene angeordneten Endanschlags mit einem an der oberen Sitzschiene angeordneten Anschlagelement begrenzt ist, wobei der Endanschlag in Form einer abschnittsweisen Verlängerung der nach unten gebogenen Abschnitte der unteren Sitzschiene ausgestaltet ist und die untere Sitzschiene im Bereich des Endanschlags ein Langloch aufweist.

Dadurch, dass der Endanschlag in Form einer abschnittsweisen Verlängerung der nach unten gebogenen Abschnitte der unteren Sitzschiene ausgestaltet ist, lässt sich ein Endanschlag in der unteren Sitzschiene bereitstellen, ohne das Material der unteren Sitzschiene, beispielsweise durch ein gesondertes Freischneiden, zu beeinträchtigen. Insbesondere werden keine zusätzlichen Ausschnitte oder Freischnitte in der unteren Sitzschiene benötigt, welche eine Steifigkeit oder eine Festigkeit der unteren Sitzschiene beeinflussen könnten.

Dadurch, dass die untere Sitzschiene im Bereich des Endanschlags ein Langloch aufweist, ist es vermeidbar, dass sich im Falle einer Überbeanspruchung des Endanschlags die untere Sitzschiene nach oben und/oder außen verbiegt. Um einem unerwünschten Verbiegen der unteren Sitzschiene entgegenzuwirken, bewirkt das Langloch in Verbindung mit einer unterhalb des Langlochs gebildeten Steges eine gezielte Einleitung der an dem Endanschlag einwirkenden Biegekräfte, wodurch eine übermäßige einwirkende Energie, insbesondere eine Zuglast, aufgenommen somit reduziert wird und ein Hochbiegen der vorderen Enden der unteren Sitzschiene vermindert wird.

Vorteilhafte Ausgestaltungen, welche einzeln oder in Kombination miteinander eingesetzt werden können, sind Gegenstand der Unteransprüche.

Der Endanschlag kann in Längsrichtung betrachtet im Bereich eines vorderen und/oder eines hinteren Endes der unteren Sitzschiene angeordnet sein. Ferner können zwei Endanschläge vorgesehen sein, insbesondere je einer im Bereich eines vorderen Endes der unteren Sitzschiene und einer im Bereich eines hinteren Endes der unteren Sitzschiene.

Der Endanschlag kann in Längsrichtung betrachtet vor und/oder hinter einer Verzahnung der unteren Sitzschiene angeordnet sein. Der Endanschlag kann zwei benachbarte in einem stumpfen Winkel zueinander angeordnete Anschlagflächen aufweisen. Hierdurch lässt sich mit einfachen Mitteln eine Zentrierung sicherstellen, so dass im Crashfall eine Überdeckung der Anschlagelemente und des Endanschlags gehalten werden kann und insbesondere ein Abrutschen des Anschlagelements in Vertikalrichtung vermeidbar ist.

Das Anschlagelement kann in einem Übergangsbereich zwischen dem U-förmigen Profil der oberen Sitzschiene und den jeweiligen Endabschnitten ausgestellt sein. Hierdurch ist das Anschlagelement in einem Profilbereich der oberen Sitzschiene realisierbar, welcher keine andere Funktion oder Schnittstelle der Sitzschiene beeinträchtigt. Darüber hinaus können die Anschlagelemente in einem nach der Montage nicht einsehbaren Bereich angeordnet sein, wodurch eine ästhetische Optik des Längseinstellers erhalten bleibt. Ferner kann durch eine entsprechende Anordnung des Endanschlags und des Anschlagelements eine Bildung von frei zugänglichen Kanten vermieden sein, wodurch ein Verletzungspotential vermindert ist. Darüber hinaus kann der Vorteil erzielt werden, dass der zwischen der unteren Sitzschiene und der oberen Sitzschiene gebildete Hohlraum nicht durch das Anschlagelement eingeschränkt ist, wenn die obere Sitzschiene relativ zur unteren Sitzschiene verschoben wird, wodurch in dem Hohlraum ein ausreichender Bauraum beispielsweise für eine Verschraubung mit dem Fahrzeugsitz oder einer Fahrzeugstruktur sowie der Montage weiterer Komponenten und Baugruppen erhalten bleibt.

Das Anschlagelement kann im Wesentlichen parallel zu einer Querrichtung ausgestellt sein. Die obere Sitzschiene kann im Bereich des Anschlagelements einen Freischnitt aufweisen. Das Anschlagelement kann eine Öffnung aufweisen.

Ferner können zwei Endanschläge vorgesehen sein, insbesondere je einer im Bereich eines vorderen Endes der unteren Sitzschiene und einer im Bereich eines hinteren Endes der unteren Sitzschiene. Das Anschlagelement kann zwischen den beiden Endanschlägen angeordnet sein. Das Anschlagelement kann in einem in Längsrichtung mittleren Drittel der oberen Sitzschiene angeordnet sein. Ferner können mehrere Anschlagelemente zwischen den beiden Endanschlägen, insbesondere in dem mittleren Drittel der oberen Sitzschiene, angeordnet sein.

Die Aufgabe wird ferner gelöst durch einen Fahrzeugsitz mit einem Längseinsteller gemäß vorstehender Beschreibung. Der erfindungsgemäße Fahrzeugsitz weist folglich die gleichen Vorteile auf, wie die zuvor beschriebenen Ausgestaltungen des Längseinstellers.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines Fahrzeugsitzes mit einem erfindungsgemäßen Längseinsteller,
- Fig. 2:: eine schematische Darstellung eines Sitzschienenpaares des erfindungsgemäßen Längseinstellers,
- Fig. 3:: eine schematische Ansicht von vorne auf das Sitzschienenpaar des erfindungsgemäßen Längseinstellers,
- Fig. 4:: eine perspektivische Darstellung einer unteren Sitzschiene des Sitzschienenpaars von Fig. 3,
- Fig. 5a:: eine vergrößerte Teilansicht eines Endabschnitts der unteren Sitzschiene von Fig. 4 mit einem umgebogenen Endanschlag,
- Fig. 5b:: eine vergrößerte Teilansicht eines Endabschnitts der unteren Sitzschiene von Fig. 4 mit einem begradigten Endanschlag,
- Fig. 6:: einen Ausschnitt eines Längsschnitts der unteren Sitzschiene von Fig. 4,
- Fig. 7:: eine perspektivische Darstellung einer oberen Sitzschiene des Sitzschienenpaares von Fig. 3,
- Fig. 8:: eine vergrößerte Darstellung eines Anschlagelements der oberen Sitzschiene von Fig. 7
- Fig. 9:: eine weitere Darstellung des Anschlagelements der oberen Sitzschiene von Fig. 7, und
- Fig. 10:: einen Ausschnitt eines Längsschnitts des Sitzschienenpaars von Fig. 3.

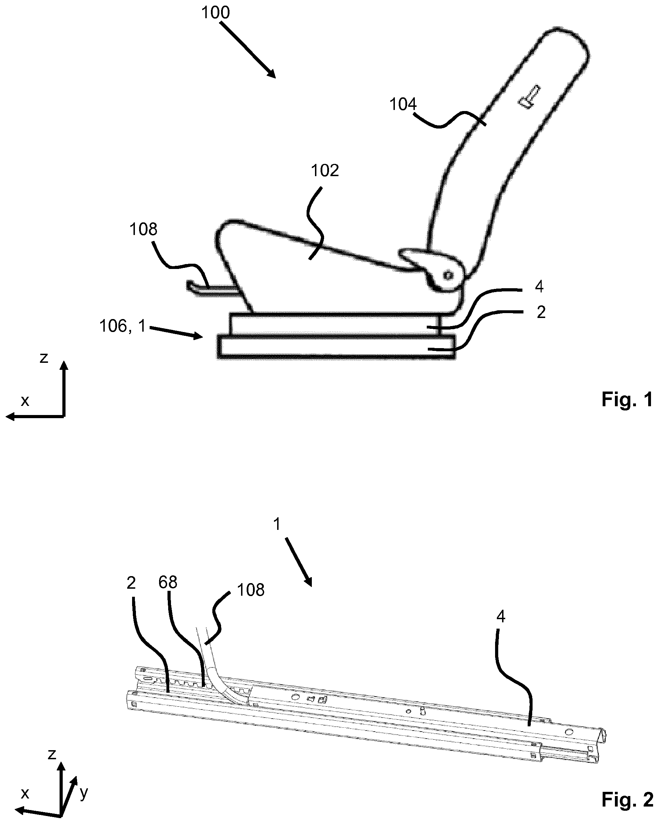

Ein in Figur 1 schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines in einem Sitzteil 102 des Fahrzeugsitzes 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Lehne 104 und wie üblich in Fahrtrichtung ausgerichtet ist. Der erfindungsgemäße Fahrzeugsitz 100 kann jedoch auch in abweichender Ausrichtung, beispielsweise quer zur Fahrtrichtung verbaut werden.

Der in Fig. 1 gezeigte Fahrzeugsitz 100 für ein Kraftfahrzeug weist das Sitzteil 102 und eine relativ zum Sitzteil 102 in ihrer Neigung einstellbare Lehne 104 auf. Eine Neigung der Lehne 104 kann beispielsweise mittels eines Rastbeschlages oder eines Getriebebeschlages einstellbar sein. Der Fahrzeugsitz 100 ist zur Einstellung einer Sitzlängsposition auf einem Längseinsteller 106 montiert.

Fig. 2 zeigt eine schematische Darstellung eines Sitzschienenpaares 1 des Längseinstellers 106. Das Sitzschienenpaar 1 ist aus einer oberen Sitzschiene 4, welche auch als Oberschiene bezeichnet werden kann, und einer unteren Sitzschiene 2, welche auch als Unterschiene bezeichnet werden kann, gebildet. In einem zwischen der unteren Sitzschiene 2 und der oberen Sitzschiene 4 gebildeten Hohlraum kann eine Verriegelungseinrichtung angeordnet sein. Die Verriegelungseinrichtung ist mittels eines Betätigungshebels 108 betätigbar. Grundlegend sind ein Aufbau und eine Funktion von Vorrichtungen zum Betätigen der Verriegelungseinrichtung, insbesondere zum Bewegen einer Verriegelungsplatte 60 der Verriegelungseinrichtung in eine Entriegelungsstellung oder eine Verriegelungsstellung, bekannt. Insofern sei beispielhaft auf die DE 10 2010 049 542 A1 sowie die DE 10 2014 219 868 A1 verwiesen, deren diesbezüglicher Offenbarungsgehalt ausdrücklich mit einbezogen wird.

Die untere Sitzschiene 2 weist eine Verzahnung 68 auf, welche mit der in der oberen Sitzschiene 4 geführten Verriegelungsplatte 60 in an sich bekannter Weise zusammenwirkt, um eine Sitzlängsposition einzustellen.

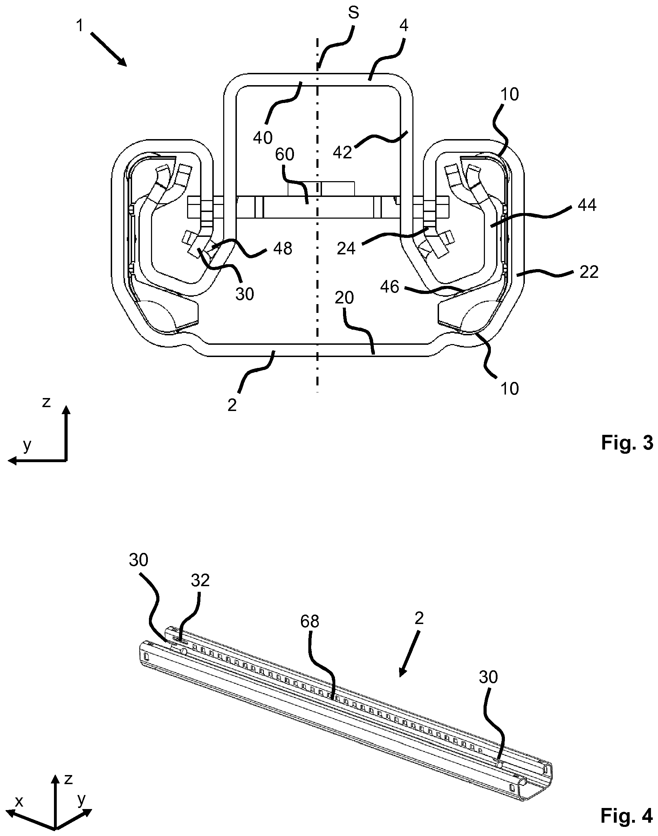

Fig. 3 zeigt einen Querschnitt durch das Sitzschienenpaar 1. Die obere Sitzschiene 4 weist ein im Wesentlichen nach unten geöffnetes U-förmiges Profil mit außen an den jeweiligen Enden nach oben gebogenen Endabschnitten 44 auf. Unter den "Endabschnitten" 44 sind allgemein parallel zur Querrichtung y seitlich nach außen und oben gebogenen Teilabschnitte des Profils bezeichnet, welche durch mehrfaches Umbiegen geformt sind. Das U-förmige Profil ist aus einem vertikal verlaufenden linken Schenkel 42 und einem parallel zum linken Schenkel 42 beabstandeten rechten Schenkel 42, sowie einem die beiden Schenkel 42 verbindenden, horizontal verlaufenden, oberen Grundprofil 40 gebildet. An den beiden unteren Enden des linken und rechten Schenkels 42 sind jeweils nach außen und oben gebogene Endabschnitte 44 vorgesehen, welche in bekannter Weise eine Hälfte einer Kugellaufbahn 10 bereitstellen, über welche sich die obere Sitzschiene 4 mittels einer Lagerung über Kugeln an der unteren Sitzschiene 2 abstützen kann.

Die untere Sitzschiene 2 weist im Wesentlichen ein C-förmiges Profil mit an den jeweiligen Enden nach unten gebogenen, insbesondere nach innen zurückgebogenen, Abschnitten 24 auf. Das C-förmige Profil der unteren Sitzschiene 2 weist eine horizontal verlaufende, untere Basis 20 mit einander gegenüberliegenden und parallel zueinander, im Wesentlichen symmetrisch zu einer Symmetrieachse S nach oben verlaufenden Profilabschnitten 22 auf, wobei die Profilabschnitte 22 im Bereich ihres oberen Endes nach innen abgewinkelt sind und aufeinander zu gerichtet verlaufen. An den jeweils freien Enden des linken und rechten Profilabschnitts 22 sind nach unten gebogene Abschnitte 24 angeordnet. Die seitlichen Profilabschnitte 22 stellen hierbei die zweite Hälfte der Kugellaufbahn 10 zur Führung der Kugeln bereit.

Die jeweiligen benachbarten Abschnitte der Profile der unteren Sitzschiene 2 sind jeweils fließend ineinander übergehend ausgestaltet. Die jeweiligen benachbarten Abschnitte der Profile der oberen Sitzschiene 4 sind jeweils fließend ineinander übergehend ausgestaltet. Bevorzugt sind die Profile der oberen Sitzschiene 4 und der unteren Sitzschiene 2 jeweils mittels mehrerer Stanzprozesse und Umformprozesse aus einem Metallblech gefertigt.

Die Querschnittsdarstellung von Fig. 3 zeigt weiter im Detail, dass in der oberen Sitzschiene 4 angeformte Anschlagelemente 48 und in der unteren Sitzschiene 2 geformte Endanschläge 30 in Längsrichtung x betrachtet einander überlappen. Hierdurch wird ein entsprechend sicheres Kontaktieren der Anschlagelemente 48 und der Endanschläge 30 gewährleistet. Die Endanschläge 30 sind mittels abgewinkelter und nach außen gestellter freier Enden des Profils der unteren Sitzschiene 2 gebildet.

In Fig. 4 ist die untere Sitzschiene 2 des Sitzschienenpaares 1 gezeigt, wobei sich die Verzahnung 68 annähernd entlang der gesamten unteren Sitzschiene 2 erstreckt. Die untere Sitzschiene 2 weist sowohl an einem vorderen Ende, als auch an einem hinteren Ende den Endanschlag 30 auf, welcher in Längsrichtung x betrachtet vor bzw. hinter der Verzahnung 68, insbesondere angrenzend, angeordnet ist. Eine Anordnung der Endanschläge 30 ist bevorzugt symmetrisch zu einer mittig angeordneten Ebene senkrecht zur Querrichtung y. Der beispielsweise am vorderen Ende angeordnete Endanschlag 30 ist somit in Längsrichtung x betrachtet bevorzugt paarweise symmetrisch an der untere Sitzschiene 2 ausgebildet. Die Endanschläge 30 ragen weiter nach unten als die Verzahnung 68, insbesondere sind die Endanschläge 30, in Längsrichtung x betrachtet, im Wesentlichen fluchtend mit der Verzahnung 68 angeordnet. Darüber hinaus ist im Bereich des vorderen Endanschlags 30 ein Langloch 32 angeordnet.

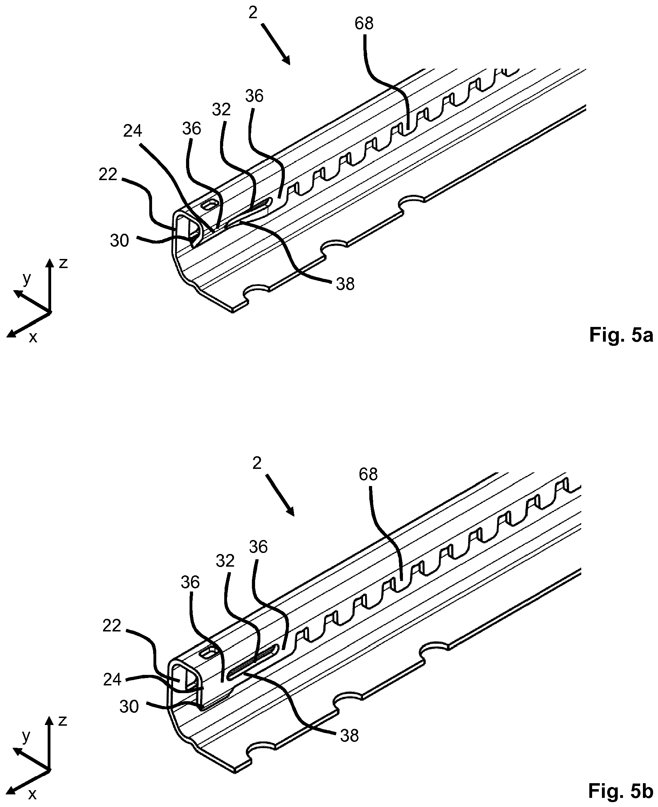

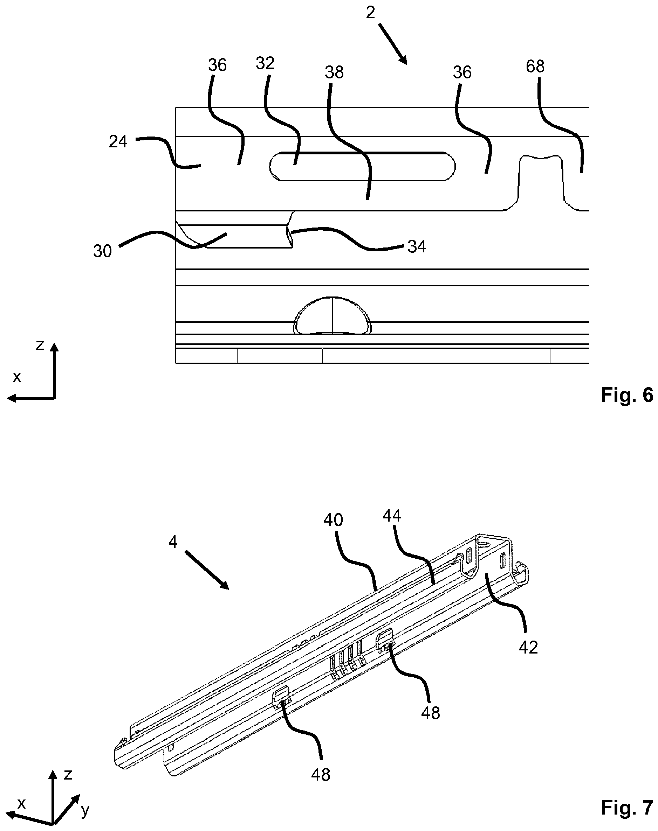

Wie in den Figuren 5a, 5b und 6 gezeigt ist, ist der Endanschlag 30 aufgrund des Langlochs 32 lediglich mittels der beiden seitlich des Langlochs 32 verbleibenden Brücken 36 mit dem nach unten gebogenen Abschnitt 24 der unteren Sitzschiene 2 verbunden. Das Langloch 32 bewirkt eine Festigkeitserhöhung, insbesondere zur Vermeidung einer Aufbiegung der unteren Sitzschiene 2 um eine Achse in Querrichtung y. Bevorzugt ist das Langloch 32 am vorderen Ende der unteren Sitzschiene 2 angeordnet. Weiterhin wird durch das Langloch 32 der Vorteil geschaffen, dass das Sitzschienenpaar 1 leichter monierbar ist. Wenn beispielsweise der Endanschlag 30, wie es in Fig. 5a gezeigt ist, vor der Montage nach außen und nach der Montage, wie es in Fig. 5b gezeigt ist, wieder in die Ausgangslage gebogen wird, ist eine Biegelinie lediglich auf eine oberhalb des Endanschlags 30 angeordnete Brücke 36 begrenzt und fällt entsprechend kurz aus. Ein unterhalb des Langloches 32 gebildeter Steg 38 erfährt beim Verbiegen nur eine leichte Biegung mit einer leichten Torsion. Bei stärkeren Beanspruchungen, insbesondere im Falle eines Anschlagens, nimmt dieser Steg 38 Zuglasten auf und verhindert ein Hochbiegen der vorderen Enden der unteren Sitzschiene 2 und der oberen Sitzschiene 4.

Der Endanschlag 30 der unteren Sitzschiene 2 weist zwei unter einem stumpfen Winkel zueinander angeordnete Anschlagsflächen 34 auf. Diese Anordnung der Anschlagsfläche 34 bildet eine Selbstzentrierung im Belastungsfall und stellt eine Überdeckung des Endanschlags 30 und der Anschlagelemente 48 sicher, insbesondere ist hierdurch ein Abrutschen der Anschlagelemente 48 in Vertikalrichtung z nach unten vermeidbar.

In Fig. 7 ist die obere Sitzschiene 4 des Sitzschienenpaares 1 gezeigt, wobei zwei voneinander beabstandete Anschlagelemente 48 zwischen dem vorderen Ende und dem hinteren Ende angeordnet sind, im Wesentlichen im Bereich eines in Längsrichtung x betrachtet mittleren Drittels der oberen Sitzschiene 4. Die Anschlagelemente 48 sind in Längsrichtung x betrachtet ebenfalls bevorzugt paarweise symmetrisch an der oberen Sitzschiene 4 ausgebildet. In einem montierten Zustand sind die beiden Anschlagelemente 48 zwischen den Endanschlägen 30 der unteren Sitzschiene 2 angeordnet.

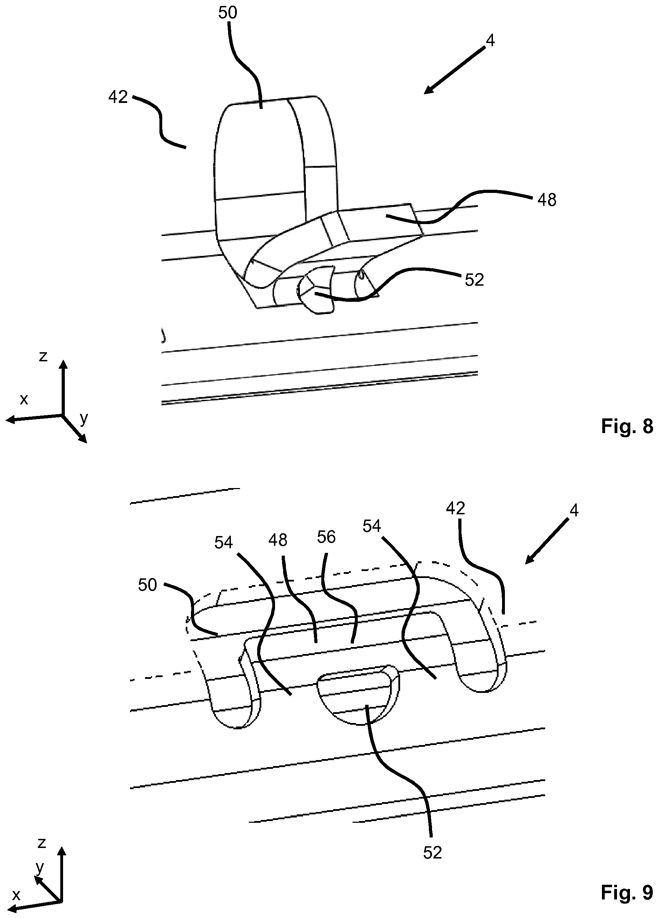

Wie in Fig. 8 im Detail gezeigt ist, ist das Anschlagelement 48 nach außen unten gebogen. Über die Geometrie der Öffnung 52 im Bereich der Biegestelle lässt sich die Gestalt der Biegung beeinflussen. Eine optimal positionierte Öffnung 52 - im einfachsten Fall ein kreisrundes Loch - bewirkt eine gezielte und über die Länge des Anschlagelements 48 veränderliche Schwächung des Anschlagselements 48. Somit ist die Geometrie auf die Anschlagfläche 34 in der unteren Sitzschiene 2 abstimmbar.

Die Öffnung 52 schwächt das gebogene Anschlagelement 48 in Vertikalrichtung z, da bei hohen Beanspruchungen eine Biegung um eine Achse in Längsrichtung x begünstigt ist. Eine Schwächung der Biegesteifigkeit um eine Achse in Vertikalrichtung z fällt relativ gesehen geringer aus. Somit ist ein Abgleiten des Anschlagelements 48 von der Anschlagfläche 34 vermeidbar bzw. verzögert. Die Anschlagfläche 34 der unteren Sitzschiene 2 bleibt folglich länger in Kontakt mit den Anschlagelemente 48, wodurch die Anschlagsfestigkeit erhöht ist.

Fig. 9 zeigt eine Geometrie des Anschlagelements 48, welche durch die Öffnung 52 beeinflusst ist. Das Anschlagelement 48 weist einen im Wesentlichen länglichen Steg 56 parallel zur Längsrichtung x auf, welcher über zwei seitlich der Öffnung 52 geformten Brücken 54 mit der restlichen oberen Sitzschiene 4 verbunden ist. Ein das Anschlagelement 48 äußerlich umlaufender Freischnitt 50 begrenzt das Anschlagelement 48 weiter. Die Öffnung 52 weist vorzugsweise die in Fig. 9 gezeigte Form auf. Hierdurch ist eine gewünschte Biegeform in der Ebene in Querrichtung y und Vertikalrichtung z definierbar.

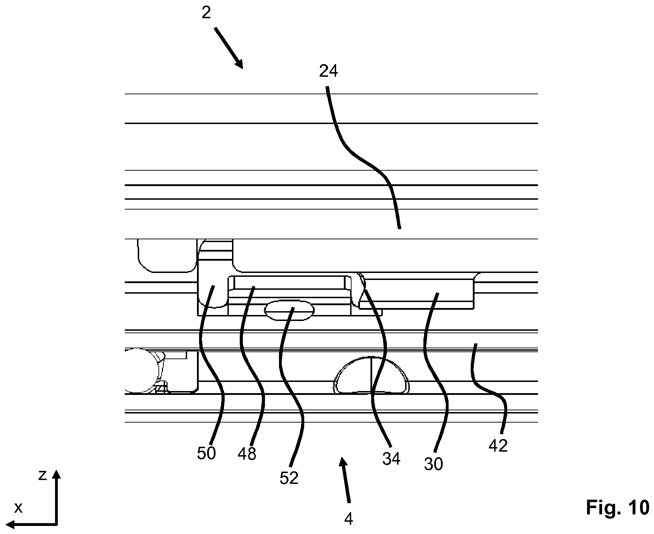

Wie weiter in Fig. 10 gezeigt ist, ergibt sich aus dem Zusammenwirken des in Längsrichtung x betrachtet vorderen Anschlagelements 48 mit dem am vorderen Ende der unteren Sitzschiene 2 befindlichen Endanschlag 30 eine Begrenzung der Verschiebung der oberen Sitzschiene 4 relativ zur unteren Sitzschiene 2 nach vorne. In entsprechend gleicher Weise ergibt sich aus dem Zusammenwirken des in Längsrichtung x betrachtet hinteren Anschlagelements 48 mit dem am hinteren Ende der unteren Sitzschiene 2 befindlichen Endanschlag 30 eine Begrenzung der Verschiebung der oberen Sitzschiene 4 relativ zur unteren Sitzschiene 2 nach hinten.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Sitzschienenpaar
- 2: untere Sitzschiene
- 4: obere Sitzschiene
- 10: Kugellaufbahn
- 20: Basis
- 22: Profilabschnitt
- 24: Abschnitt
- 30: Endanschlag
- 32: Langloch
- 34: Anschlagfläche
- 36: Brücke
- 38: Steg
- 40: Grundprofil
- 42: Schenkel
- 44: Endabschnitt
- 48: Anschlagelement
- 50: Freischnitt
- 52: Öffnung
- 54: Brücke
- 56: Steg
- 60: Verriegelungsplatte
- 68: Verzahnung
- 100: Fahrzeugsitz
- 102: Sitzteil
- 104: Lehne
- 106: Längseinsteller
- 108: Betätigungshebel
- S: Symmetrieachse
- x: Längsrichtung
- y: Querrichtung
- z: Vertikalrichtung

## Patentansprüche

1. Längseinsteller (106), insbesondere für einen Fahrzeugsitz, aufweisend mindestens ein Sitzschienenpaar (1), welches aus einer unteren Sitzschiene (2) und einer relativ zur unteren Sitzschiene (2) in Längsrichtung (x) verschiebbar geführten oberen Sitzschiene (4) gebildet ist, wobei sich die beiden Sitzschienen (2, 4) des Sitzschienenpaares (1) einander wechselseitig umgreifen, wobei die untere Sitzschiene (2) ein im Wesentlichen C-förmiges Profil (20, 22) mit an den Enden nach unten gebogenen Abschnitten (24) aufweist und die obere Sitzschiene (4) ein im Wesentlichen U-förmiges Profil (40, 42) mit nach oben gebogenen Endabschnitten (44) aufweist, wobei die relative Verschiebbarkeit der beiden Sitzschienen (2, 4) zueinander mittels eines Zusammenwirkens eines an der unteren Sitzschiene (2) angeordneten Endanschlags (30) mit einem an der oberen Sitzschiene (4) angeordneten Anschlagelement (48) begrenzt ist,
**dadurch gekennzeichnet,**
**dass** der Endanschlag (30) in Form einer abschnittsweisen Verlängerung der nach unten gebogenen Abschnitte (24) ausgestaltet ist und die untere Sitzschiene (2) im Bereich des Endanschlags (30) ein Langloch (32) aufweist.

2. Längseinsteller (106) gemäß Anspruch 1, wobei der Endanschlag (30) aufgrund des Langlochs (32) lediglich mittels zwei seitlich des Langlochs (32) verbleibenden Brücken (36) mit dem nach unten gebogenen Abschnitt (24) der unteren Sitzschiene (2) verbunden ist.

3. Längseinsteller (106) gemäß einem der Ansprüche 1 oder 2, wobei der Endanschlag (30) in Längsrichtung (x) betrachtet im Bereich eines vorderen und/oder hinteren Endes der unteren Sitzschiene (2) angeordnet ist.

4. Längseinsteller (106) gemäß einem der Ansprüche 1 bis 3, wobei der Endanschlag (30) weiter nach unten ragt als eine Verzahnung (68).

5. Längseinsteller (106) gemäß einem der Ansprüche 1 bis 4, wobei der Endanschlag (30), in Längsrichtung (x) betrachtet, im Wesentlichen fluchtend mit der Verzahnung (68) angeordnet ist.

6. Längseinsteller (106) gemäß einem der Ansprüche 1 bis 5, wobei der Endanschlag (30) in Längsrichtung (x) betrachtet vor und/oder hinter einer Verzahnung (68) der unteren Sitzschiene (2) angeordnet ist.

7. Längseinsteller (106) gemäß einem der Ansprüche 1 bis 6, wobei der Endanschlag (30) zwei benachbarte in einem stumpfen Winkel zueinander angeordnete Anschlagflächen (34) aufweist.

8. Längseinsteller (106) gemäß einem der Ansprüche 1 bis 7, wobei das Anschlagelement (48) in einem Übergangsbereich zwischen dem U-förmigen Profil (40, 42) der oberen Sitzschiene (4) und den jeweiligen Endabschnitten (44) ausgestellt ist.

9. Längseinsteller (106) gemäß einem der Ansprüche 1 bis 8, wobei das Anschlagelement (48) im Wesentlichen parallel zu einer Querrichtung (y) ausgestellt ist.

10. Längseinsteller (106) gemäß einem der Ansprüche 1 bis 9, wobei die obere Sitzschiene (4) im Bereich des Anschlagelements (48) einen Freischnitt (50) aufweist.

11. Längseinsteller (106) gemäß einem der Ansprüche 1 bis 10, wobei das Anschlagelement (48) eine Öffnung (52) aufweist.

12. Längseinsteller (106) gemäß einem der Ansprüche 1 bis 11, wobei zwei Endanschläge (30) vorgesehen sind, insbesondere je einer im Bereich eines vorderen Endes der unteren Sitzschiene (2) und einer im Bereich eines hinteren Endes der unteren Sitzschiene (2).

13. Längseinsteller (106) gemäß Anspruch 12, wobei das Anschlagelement (48) zwischen den beiden Endanschlägen (30) angeordnet ist.

14. Längseinsteller (106) gemäß einem der Ansprüche 1 bis 13, wobei das Anschlagelement (48) in einem in Längsrichtung (x) mittleren Drittel der oberen Sitzschiene (4) angeordnet ist.

15. Fahrzeugsitz (100) mit einem Längseinsteller (106) nach einem der vorhergehenden Ansprüche.

## Claims

1. Longitudinal adjuster (106), in particular for a vehicle seat, having at least one seat rail pair (1) which is formed by a lower seat rail (2) and an upper seat rail (4) which is displaceably guided relative to the lower seat rail (2) in the longitudinal direction (x), wherein the two seat rails (2, 4) of the seat rail pair (1) mutually engage around each other, wherein the lower seat rail (2) has a substantially C-shaped profile (20, 22) with portions (24) which are bent downward at the ends and the upper seat rail (4) has a substantially U-shaped profile (40, 42) having end portions (44) which are bent upward, wherein the relative displaceability of the two seat rails (2, 4) with respect to each other is limited by means of a cooperation of an end stop (30) which is arranged on the lower seat rail (2) with a stop element (48) which is arranged on the upper seat rail (4),
**characterized in that**
the end stop (30) is configured in the form of a partial extension of the downwardly bent portions (24) and the lower seat rail (2) has an elongate hole (32) in the region of the end stop (30).

2. Longitudinal adjuster (106) according to Claim 1, wherein the end stop (30) as a result of the elongate hole (32) is connected to the downwardly bent portion (24) of the lower seat rail (2) only by means of two bridges (36) remaining at the side of the elongate hole (32).

3. Longitudinal adjuster (106) according to either Claim 1 or Claim 2, wherein the end stop (30), when viewed in the longitudinal direction (x), is arranged in the region of a front and/or rear end of the lower seat rail (2).

4. Longitudinal adjuster (106) according to one of Claims 1 to 3, wherein the end stop (30) protrudes further downward than a tooth arrangement (68).

5. Longitudinal adjuster (106) according to one of Claims 1 to 4, wherein the end stop (30), when viewed in the longitudinal direction (x), is arranged substantially in alignment with the tooth arrangement (68) .

6. Longitudinal adjuster (106) according to any one of Claims 1 to 5, wherein the end stop (30), when viewed in the longitudinal direction (x), is arranged in front of and/or behind a tooth arrangement (68) of the lower seat rail (2).

7. Longitudinal adjuster (106) according to one of Claims 1 to 6, wherein the end stop (30) has two adjacent stop faces (34) which are arranged at an obtuse angle relative to each other.

8. Longitudinal adjuster (106) according to one of Claims 1 to 7, wherein the stop element (48) is deployed in a transition region between the U-shaped profile (40, 42) of the upper seat rail (4) and the respective end portions (44).

9. Longitudinal adjuster (106) according to one of Claims 1 to 8, wherein the stop element (48) is constructed substantially parallel with a transverse direction (y).

10. Longitudinal adjuster (106) according to one of Claims 1 to 9, wherein the upper seat rail (4) has in the region of the stop element (48) a free-cut (50).

11. Longitudinal adjuster (106) according to one of Claims 1 to 10, wherein the stop element (48) has an opening (52).

12. Longitudinal adjuster (106) according to one of Claims 1 to 11, wherein two end stops (30) are provided, in particular one in the region of a front end of the lower seat rail (2) and one in the region of a rear end of the lower seat rail (2).

13. Longitudinal adjuster (106) according to Claim 12, wherein the stop element (48) is arranged between the two end stops (30).

14. Longitudinal adjuster (106) according to one of Claims 1 to 13, wherein the stop element (48) is arranged in a central third of the upper seat rail (4) in the longitudinal direction (x).

15. Vehicle seat (100) having a longitudinal adjuster (106) according to one of the preceding claims.

## Revendications

1. Dispositif de réglage longitudinal (106), en particulier pour un siège de véhicule, présentant au moins une paire de rails (1) qui est formée d'un rail de siège inférieur (2) et d'un rail de siège supérieur (4) guidé de manière déplaçable dans la direction longitudinale (x) par rapport au rail de siège inférieur (2), les deux rails de siège (2, 4) de la paire de rails de siège (1) s'engageant mutuellement l'un dans l'autre, et le rail de siège inférieur (2) présentant un profilé essentiellement en forme de C (20, 22) avec des portions (24) recourbées vers le bas au niveau des extrémités, et le rail de siège supérieur (4) présentant un profilé essentiellement en forme de U (40, 42) avec des portions d'extrémité (44) recourbées vers le haut, la capacité de déplacement mutuel des deux rails de siège (2, 4) l'un par rapport à l'autre étant limitée au moyen d'une coopération entre une butée de fin de course (30) disposée au niveau du rail de siège inférieur (2) et un élément de butée (48) disposé au niveau du rail de siège supérieur (4),
**caractérisé en ce que**
la butée de fin de course (30) est configurée sous la forme d'un prolongement partiel des portions recourbées vers le bas (24) et le rail de siège inférieur (2) présente un trou oblong (32) dans la région de la butée de fin de course (30).

2. Dispositif de réglage longitudinal (106) selon la revendication 1, dans lequel la butée de fin de course (30), en raison du trou oblong (32), est connectée à la portion recourbée vers le bas (24) du rail de siège inférieur (2) seulement par deux ponts (36) subsistant sur les côtés du trou oblong (32).

3. Dispositif de réglage longitudinal (106) selon l'une des revendications 1 et 2, dans lequel la butée de fin de course (30), vue dans la direction longitudinale (x), est disposée dans la région d'une extrémité avant et/ou arrière du rail de siège inférieur (2).

4. Dispositif de réglage longitudinal (106) selon l'une quelconque des revendications 1 à 3, dans lequel la butée de fin de course (30) dépasse vers le bas plus qu'une denture (68).

5. Dispositif de réglage longitudinal (106) selon l'une quelconque des revendications 1 à 4, dans lequel la butée de fin de course (30), vue dans la direction longitudinale (x), est disposée essentiellement en affleurement avec la denture (68).

6. Dispositif de réglage longitudinal (106) selon l'une quelconque des revendications 1 à 5, dans lequel la butée de fin de course (30), vue dans la direction longitudinale (x), est disposée avant et/ou après une denture (68) du rail de siège inférieur (2).

7. Dispositif de réglage longitudinal (106) selon l'une quelconque des revendications 1 à 6, dans lequel la butée de fin de course (30) présente deux surfaces de butée (34) adjacentes, disposées suivant un angle obtus l'une par rapport à l'autre.

8. Dispositif de réglage longitudinal (106) selon l'une quelconque des revendications 1 à 7, dans lequel l'élément de butée (48) est exposé dans une région de transition entre le profilé en forme de U (40, 42) du rail de siège supérieur (4) et les portions d'extrémité respectives (44).

9. Dispositif de réglage longitudinal (106) selon l'une quelconque des revendications 1 à 8, dans lequel l'élément de butée (48) est exposé essentiellement parallèlement à une direction transversale (y).

10. Dispositif de réglage longitudinal (106) selon l'une quelconque des revendications 1 à 9, dans lequel le rail de siège supérieur (4) présente un évidement (50) dans la région de l'élément de butée (48).

11. Dispositif de réglage longitudinal (106) selon l'une quelconque des revendications 1 à 10, dans lequel l'élément de butée (48) présente une ouverture (52).

12. Dispositif de réglage longitudinal (106) selon l'une quelconque des revendications 1 à 11, dans lequel deux butées de fin de course (30) sont prévues, en particulier une dans la région d'une extrémité avant du rail de siège inférieur (2) et une dans la région d'une extrémité arrière du rail de siège inférieur (2).

13. Dispositif de réglage longitudinal (106) selon la revendication 12, dans lequel l'élément de butée (48) est disposé entre les deux butées de fin de course (30).

14. Dispositif de réglage longitudinal (106) selon l'une quelconque des revendications 1 à 13, dans lequel l'élément de butée (48) est disposé dans un tiers central du rail de siège supérieur (4), vu dans la direction longitudinale (x).

15. Siège de véhicule (100) comprenant un dispositif de réglage longitudinal (106) selon l'une quelconque des revendications précédentes.
